# EUROPEAN PATENT APPLICATION

(11) **EP 4 106 432 A1**
(43) Date of publication of application: **21.12.2022**
(21) Application number: 21829433.8
(22) Date of filing: 16.06.2021
(51) Int. Cl.: H04W 72/02, H04W 72/04, H04W 72/14, H04L 1/18, H04W 76/14, H04W 92/18

(54) **APPARATUS AND METHOD FOR TERMINAL TO PROCESS SIDELINK TRANSMISSION IN WIRELESS COMMUNICATION SYSTEM**

(30) Priority: 26.06.2020 KR 20200078693
(71) Applicant: Samsung Electronics Co., Ltd., Gyeonggi-do 16677 (KR)
(72) Inventor: KANG, Hyunjeong, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2021/007533
(87) International publication number: WO 2021/261834

(57) **Abstract**

The present disclosure relates to: a communication technique for merging IoT technology with a 5G communication system for supporting a data transmission rate higher than that of a 4G system; and a system therefor. The present disclosure can be applied to intelligent services (for example, smart homes, smart buildings, smart cities, smart cars or connected cars, healthcare, digital education, retail businesses, security-and safety-related services, and the like) on the basis of 5G communication technology and IoT-related technology. According to one embodiment of the present invention, a method by which a terminal processes sidelink transmission in a wireless communication system comprises selecting a sidelink transmission resource pool, selecting a sidelink transmission resource from the selected transmission resource pool, and configuring a transmission block and a MAC PDU for using the selected transmission resource.

## Description

### [Technical Field]

The disclosure relates to a wireless communication system and, more particularly, to a method and an apparatus for processing sidelink transmission by a UE in a wireless communication system.

### [Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post long term evolution (post LTE)" system.

The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems.

In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multi-points (CoMP), reception-end interference cancellation and the like.

In the 5G system, hybrid FSK and QAM modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (cloud RAN) as the above-described big data processing technology may also be considered an example of convergence of the 5G technology with the IoT technology.

Further, UE direct communication (sidelink communication) using a 5G communication system is being researched, and the UE direction communication may be applied to, for example, vehicle communication (vehicle-to-everything (V2X)) and is expected to provide users with various services.

In order to provide various services in the 5G system, an efficient method of processing sidelink data transmission and reception is being researched.

### [Disclosure]

### [Technical Problem]

The disclosure provides an apparatus and a method of acquiring transmission resources by a UE in a wireless communication system and processing a transport block to be included in the acquired transmission resources.

### [Solution to Problem]

According to an embodiment of the disclosure, a method performed by a first terminal in a wireless communication system includes: identifying whether sidelink data to be transmitted is available in a logical channel; in case that the sidelink data is available in the logical channel, identifying whether hybrid automatic repeat request (HARQ) feedback for the logical channel is enabled; selecting a resource pool, based on a result of the identification; selecting a resource from the selected resource pool; and performing sidelink data transmission to a second terminal using the selected resource.

According to another embodiment of the disclosure, a first terminal apparatus in a wireless communication system includes: a transceiver; and a controller configured to identify whether sidelink data to be transmitted is available in a logical channel; in case that the sidelink data is available in the logical channel, identify whether hybrid automatic repeat request (HARQ) feedback for the logical channel is enabled; select a resource pool, based on a result of the identification; select a resource from the selected resource pool; and control the transceiver to perform sidelink data transmission to a second terminal using the selected resource.

### [Advantageous Effects of Invention]

According to various embodiments, it is possible to acquire effects of efficiently supporting sidelink flow in which various quality of service (QoS) profiles and a mixed QoS profile are configured by providing a method of selecting a sidelink transmission resource of the UE.

### [Brief Description of Drawings]

FIG. 1 illustrates a wireless communication system according to an embodiment of the disclosure.
FIG. 2 illustrates a configuration of a BS in a wireless communication system according to an embodiment of the disclosure.
FIG. 3 illustrates a configuration of a UE in a wireless communication system according to an embodiment of the disclosure.
FIG. 4 illustrates a configuration of a communication unit in a wireless communication system according to an embodiment of the disclosure.
FIG. 5 illustrates a structure of wireless time-frequency resources in a wireless communication system according to an embodiment of the disclosure.
FIG. 6A illustrates a scenario for sidelink communication according to an embodiment of the disclosure.
FIG. 6B illustrates a scenario for sidelink communication according to an embodiment of the disclosure.
FIG. 6C illustrates a scenario for sidelink communication according to an embodiment of the disclosure.
FIG. 6D illustrates a scenario for sidelink communication according to an embodiment of the disclosure.
FIG. 7A illustrates a transmission scheme of sidelink communication according to an embodiment of the disclosure.
FIG. 7B illustrates a transmission scheme of sidelink communication according to an embodiment of the disclosure.
FIG. 8A illustrates an operation in which the UE processes sidelink transmission according to an embodiment of the disclosure.
FIG. 8B illustrates an operation in which the UE selects sidelink transmission resources according to an embodiment of the disclosure.
FIG. 9 illustrates an operation in which the UE selects a sidelink transmission resource pool according to an embodiment of the disclosure.
FIG. 10 illustrates an operation in which the UE selects a sidelink transmission resource pool according to an embodiment of the disclosure.

### [Mode for Invention]

Hereinafter, exemplary embodiments of the disclosure will be described in detail with reference to the accompanying drawings. It should be noted that, in the drawings, the same or like elements are designated by the same or like reference signs as much as possible. Further, a detailed description of known functions or configurations that may make the subject matter of the disclosure unclear will be omitted.

In describing embodiments of the disclosure, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Further, the "unit" in the embodiments may include one or more processors.

The following detailed description of embodiments of the disclosure is mainly directed to New RAN (NR) as a radio access network and Packet Core (5G system, 5G core network, or next generation core (NG Core)) as a core network, which are specified in the 5G mobile communication standards defined by the 3rd generation partnership project long term evolution (3GPP LTE) that is a mobile communication standardization group, but based on determinations by those skilled in the art, the main idea of the disclosure may be applied to other communication systems having similar backgrounds or channel types through some modifications without significantly departing from the scope of the disclosure.

In the 5G system, in order to support network automation, a network data collection and analysis function (NWDAF), which is a network function that provides a function to analyze and provide data collected from a 5G network, may be defined. The NWDAF may collect/store/analyze information from 5G networks and provide the results to unspecified network functions (NFs), and the analysis results may be used independently in each NF.

In the following description, some of terms and names defined in the 3GPP standards (standards for 5G, NR, LTE, or other similar systems) may be used for the convenience of description. However, the disclosure is not limited by these terms and names, and may be applied in the same way to systems that conform other standards.

Hereinafter, the disclosure relates to an apparatus and a method of processing sidelink transmission by a UE in a wireless communication system. Specifically, in the disclosure, the UE may determine a mode in which the UE selects sidelink transmission resources by itself, selects a sidelink transmission resource pool, acquire sidelink transmission resources in the selected transmission resource pool, configure a MAC PDU to use the acquired sidelink transmission resources, and configure a transmission block.

According to an embodiment of the disclosure, the UE may operate various HARQ retransmission modes to acquire an effect of efficiently supporting sidelink flow configured for serving various QoS profiles and a mixed QoS profile.

Terms referring to a signal used in the following description, terms referring to a channel, terms referring to control information, terms referring to network entities, and terms referring to elements of a device are used only for convenience of description. Accordingly, the disclosure is not limited to the terms used in the disclosure, and other terms referring to a target having the equivalent technical meaning may be used.

In the following description, the terms "physical channel" and "signal" may be interchangeably used with "data" or "control signal". For example, "physical downlink shared channel (PDSCH)" is a term referring to a physical channel for transmitting data, but may be used to refer to data. That is, in the disclosure, the expression "transmit a physical channel" may be interpreted to be the same as the expression "transmit data or a signal through a physical channel".

In the disclosure, "higher-layer signaling" refers to a method of transmitting a signal from a base station (BS) to a UE through a downlink data channel of a physical layer or from a UE to a BS through an uplink data channel of a physical layer. Higher-layer signaling may be understood as radio resource control (RRC) signaling or a media access control (MAC) control element (CE).

Further, in the disclosure, the expressions "larger than" or "smaller than" may be used to indicate whether a specific condition is satisfied or fulfilled, but are used only to indicate examples, and do not exclude "larger than or equal to" or "equal to or smaller than". A condition indicating "larger than or equal to" may be replaced with "larger than", a condition indicating "equal to or smaller than" may be replaced with "smaller than", a condition indicating "larger than or equal to and smaller than" may be replaced with "larger than and equal to and smaller than".

Further, the disclosure describes various embodiments using the terms used in some communication standards (for example, 3^{rd}-generation partnership project (3GPP)), but this is only an example. Embodiments of the disclosure may be easily modified and applied to other communication systems.

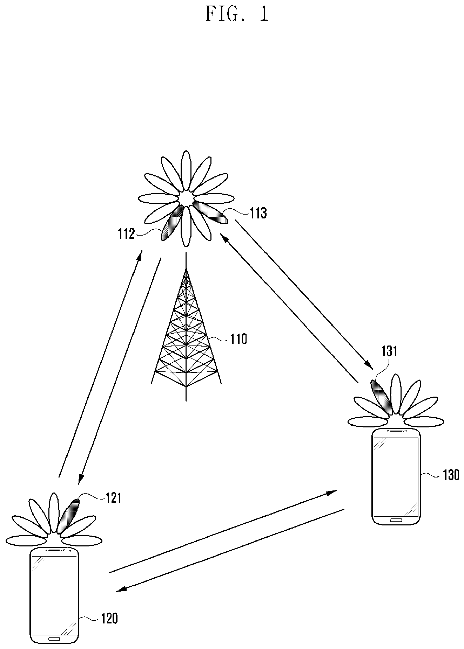

FIG. 1 illustrates a wireless communication system according to an embodiment of the disclosure.

FIG. 1 illustrates a BS 110, a UE 120, and a UE 130 as parts of nodes using a radio channel in a wireless communication system. Although FIG. 1 illustrates only one BS, another BS that is the same as or similar to the BS 110 may be further included.

The BS 110 is a network infrastructure element that provides radio access to the UEs 120 and 130. The BS 110 has coverage defined in a predetermined geographical area on the basis of the range within which a signal can be transmitted. The BS 110 may be referred to as an "access point (AP)", an "eNodeB (eNB)", a "5^{th}-generation (5G) node", a "gNodeB (next generation node B (gNB))", a "wireless point", or a "transmission/reception point (TRP)", or using another term having a technical meaning equivalent thereto, as well as "base station".

Each of the first UE 120 and the second UE 130 is a device used by a user and communicates with the BS 110 through a radio channel. A link from the BS 110 to the first UE 120 or the second UE 130 is referred to as a downlink (DL), and a link from the first UE 120 or the second UE 130 to the BS 110 is referred to as an uplink (UL). Further, the first UE 120 and the second UE 130 may communicate with each other through a radio channel. At this time, a link between the first UE 120 and the second UE 130 is referred to as a sidelink, and the sidelink may be interchangeably used with a PC-5 interface. According to circumstances, at least one of the first UE 120 and the second UE 130 may be operated without any involvement of the user. That is, at least one of UEs #1 120 and UE #2 130 is a device that performs machine-type communication (MTC), and may not be carried by the user. Each of the first UE 120 and the second UE 130 may be referred to as a "user equipment (UE)", "mobile station", "subscriber station", "remote terminal", "wireless terminal", or "user device", or using another term having an equivalent technical meaning, as well as "terminal".

The BS 110, the first terminal 120, and the second terminal 130 may transmit and receive a wireless signal in millimeter-wave (mmWave) bands (for example, 28 GHz, 30 GHz, 38 GHz, and 60 GHz). At this time, in order to increase a channel gain, the BS 110, the first UE 120, and the second UE 130 may perform beamforming. The beamforming may include transmission beamforming and reception beamforming. That is, the BS 110, the first UE 120, and the second UE 130 may assign directivity to a transmission signal or a reception signal. To this end, the BS 110 and the UEs 120 and 130 may select serving beams 112, 113, 121, and 131 through a beam search procedure or beam management procedure. After the serving beams 112, 113, 121, and 131 are selected, communication may be performed through resources having a quasi-co-located (QCL) relationship with resources through which the serving beams 112, 113, 121, and 131 are transmitted.

If the large-scale characteristics of a channel for transmitting symbols through a first antenna port can be inferred from a channel for transmitting symbols through a second antenna port, the first antenna port and the second antenna port may be evaluated to have a QCL relationship therebetween. For example, the large-scale characteristics may include at least one of delay spread, Doppler spread, Doppler shift, average gain, average delay, and spatial receiver parameters.

The first UE 120 and the second UE 130 illustrated in FIG. 1 may support vehicle communication. In the case of vehicle communication, the standardization work for vehicle-to-everything (V2X) has finished in 3GPP release 14 and release 15 on the basis of a device-to-device (D2D) communication structure in an LTE system, and an effort to develop V2X is made on the basis of current 5G NR In NR V2X, unicast communication, groupcast communication, multicast communication, and broadcast communication will be supported between UEs. Further, NR V2X aims at providing more evolved service such as platooning, advanced driving, extended sensor, and remote driving, unlike LTE V2X aiming at transmitting and receiving basic safety information required for driving of vehicles.

V2X services may be divided into a basic safety service and an advanced service. The basic safety service may include detailed services such as a vehicle notification (cooperative awareness messages (CAM) or basic safety message (BSM)) service, a left-turn notification service, a forward collision warning service, an approaching emergency vehicle notification service, a forward obstacle warning service, and an intersection signal information service, and may transmit and receive V2X information through a broadcast, unicast, or groupcast transmission scheme. The advanced service has more stringent quality of service (QoS) requirements compared to the basic safety service, and needs a scheme of transmitting and receiving V2X information through unicast and groupcast transmission schemes as well as the broadcast transmission scheme, in order to transmit and receive V2X information within a specific vehicle group or to transmit and receive V2X information between two vehicles. The advanced service may include detailed services such as a platooning service, an autonomous driving service, a remote driving service, and an extended sensor-based V2X service.

Hereinafter, the sidelink (SL) may refer to a signal transmission/reception path between UEs, which may be interchangeable with a PC5 interface. The base station (BS) is an entity that allocates resources of the UE and may be a BS supporting both of V2X communication and general cellular communication or a BS supporting only V2X communication. That is, the BS may be an NR BS (for example, gNB), an LTE BS (for example, eNB), or a road site unit (RSU). The UE (terminal) may include all of a general user equipment, a mobile station, a vehicle supporting vehicular-to-vehicular (V2V), a vehicle supporting vehicular-to-pedestrian (V2P), a handset of a pedestrian (for example, a smartphone), a vehicle supporting vehicular-to-network (V2N), a vehicle supporting vehicular-to-infrastructure (V2I), an RSU having a UE function, an RSU having a BS function, an RSU having some of BS functions and some of UE functions, and the like. Further, the V2X UE used in the following description may be referred to as a UE. That is, in connection with V2X communication, the UE may be used as a V2X UE.

The BS and the UE are connected through a Uu interface. The uplink (UL) is a radio link through which the UE transmits data or a control signal to the BS and the downlink (DL) is a radio link through the BS transmits data or a control signal to the UE.

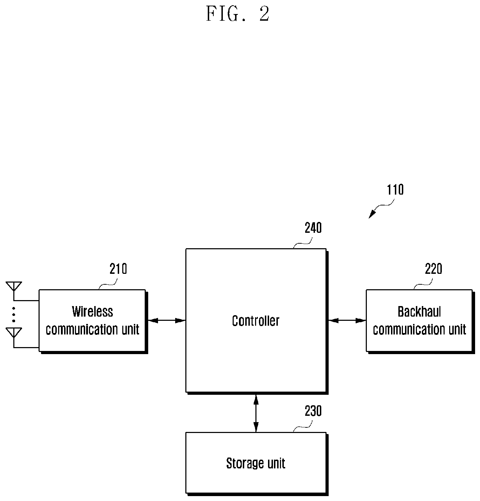

FIG. 2 illustrates a configuration of the BS in the wireless communication system according to an embodiment of the disclosure. The configuration illustrated in FIG. 2 may be understood as a configuration of the BS 110. The term "...unit", or the ending of a word, such as "...or", "...er", or the like, may indicate a unit of processing at least one function or operation, which may be embodied in hardware, software, or a combination of hardware and software.

Referring to FIG. 2, the BS 110 includes a wireless communication unit 210, a backhaul communication unit 220, a storage unit 230, and a controller 240.

The wireless communication unit 210 performs functions for transmitting and receiving a signal through a radio channel. For example, the wireless communication unit 210 performs a function of conversion between a baseband signal and a bitstream according to the physical-layer standard of the system. For example, in data transmission, the wireless communication unit 210 generates complex symbols by encoding and modulating a transmission bitstream. In data reception, the wireless communication unit 210 reconstructs a reception bitstream by demodulating and decoding a baseband signal.

The wireless communication unit 210 up-converts a baseband signal into a radiofrequency (RF) band signal, transmits the RF band signal through an antenna, and down-converts an RF band signal received through an antenna into a baseband signal. To this end, the wireless communication unit 210 may include a transmission filter, a reception filter, an amplifier, a mixer, an oscillator, a digital-to-analog convertor (DAC), and an analog-to-digital convertor (ADC). Further, the wireless communication unit 210 may include a plurality of transmission/reception paths. In addition, the wireless communication unit 210 may include at least one antenna array including a plurality of antenna elements.

On the hardware side, the wireless communication unit 210 may include a digital unit and an analog unit, and the analog unit may include a plurality of sub-units according to operating power and operating frequency. The digital unit may be implemented by at least one processor (for example, a digital signal processor (DSP)).

The wireless communication unit 210 transmits and receives a signal as described above. Accordingly, all or part of the wireless communication unit 210 may be referred to as a "transmitter", a "receiver", or a "transceiver". Further, in the following description, transmission and reception performed through a radio channel may include the above-described processing by the wireless communication unit 210.

The backhaul communication unit 220 provides an interface for communicating with other nodes within the network. That is, the backhaul communication unit 220 converts a bitstream transmitted from the BS 110 to another node, for example, another access node, another BS, or a core network, into a physical signal, and converts a physical signal received from another node into a bitstream.

The storage unit 230 stores data such as a basic program, an application, and configuration information for the operation of the BS 110. The storage unit 230 may include volatile memory, nonvolatile memory, or a combination of volatile memory and nonvolatile memory. The storage unit 230 provides stored data in response to a request from the controller 240.

The controller 240 controls the overall operations of the BS 110. For example, the controller 240 transmits and receives a signal through the wireless communication unit 210 or the backhaul communication unit 220. The controller 240 records data in the storage unit 230 and reads the same. The controller 240 may perform the functions of a protocol stack required according to communication standards. According to another implementation, the protocol stack may be included in the wireless communication unit 210. To this end, the controller 240 may include at least one processor. According to embodiments, the controller 240 may control the BS 110 to perform operations according to embodiments described below.

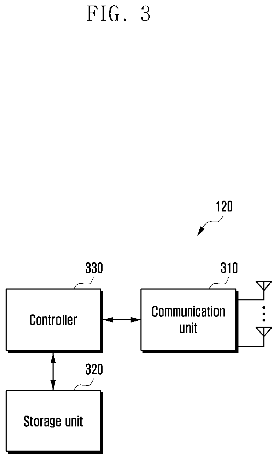

FIG. 3 illustrates a configuration of the UE in the wireless communication system according to an embodiment of the disclosure.

The configuration illustrated in FIG. 3 may be understood as the configuration of a UE 120. The term "...unit", or the ending of a word, such as "...or", "...er", or the like, may indicate a unit of processing at least one function or operation, which may be embodied in hardware, software, or a combination of hardware and software.

Referring to FIG. 3, the UE 120 includes a communication unit 310, a storage unit 320, and a controller 330.

The communication unit 310 performs functions for transmitting and receiving a signal through a radio channel. For example, the communication unit 310 performs a function of conversion between a baseband signal and a bitstream according to a physical-layer standard of the system. For example, in data transmission, the communication unit 310 generates complex symbols by encoding and modulating a transmission bitstream. In data reception, the communication unit 310 reconstructs a reception bitstream by demodulating and decoding a baseband signal. Further, the communication unit 310 up-converts a baseband signal to an RF band signal, transmits the RF band signal through an antenna, and then down-converts the RF band signal received through the antenna to the baseband signal. For example, the communication unit 310 may include a transmission filter, a reception filter, an amplifier, a mixer, an oscillator, a DAC, and an ADC.

The communication unit 310 may include a plurality of transmission/reception paths. The communication unit 310 may include at least one antenna array including a plurality of antenna elements. On the hardware side, the communication unit 310 may include a digital circuit and an analog circuit (for example, a radio frequency integrated circuit (RFIC)). The digital circuit and the analog circuit may be implemented as one package. The communication unit 310 may include a plurality of RF chains. The communication unit 310 may perform beamforming.

The communication unit 310 transmits and receives a signal as described above. Accordingly, all or some of the communication unit 310 may be referred to as a "transmitter", a "receiver", or a "transceiver". In the following description, transmission and reception performed through a radio channel are used to have a meaning including the processing performed by the communication unit 310.

The storage unit 320 stores a basic program for the operation of the UE 120, an application, and data such as configuration information. The storage unit 320 may include volatile memory, nonvolatile memory, or a combination of volatile memory and nonvolatile memory. The storage unit 320 provides stored data in response to a request from the controller 330.

The controller 330 controls the overall operations of the UE 120. For example, the controller 330 transmits and receives a signal through the communication unit 310. The controller 330 records data in the storage unit 320 and reads the same. The controller 330 may perform the functions of a protocol stack required by the communication standard. To this end, the controller 330 may include at least one processor or microprocessor, or may be a part of the processor. Further, the part of the communication unit 310 or the controller 330 may be referred to as a communications processor (CP). According to embodiments, the controller 330 may control the UE 120 to perform operations according to embodiments described below.

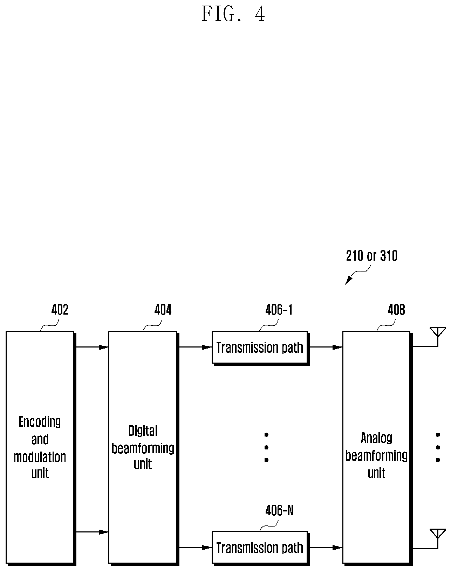

FIG. 4 illustrates a configuration of the communication unit in the wireless communication system according to an embodiment of the disclosure.

FIG. 4 illustrates an example of the detailed configuration of the wireless communication unit 210 of FIG. 2 or the communication unit 310 of FIG. 3. Specifically, FIG. 4 illustrates elements for performing beamforming as parts of the wireless communication unit 210 of FIG. 2 or the communication unit 310 of FIG. 3.

Referring to FIG. 4, the wireless communication unit 210 or the communication unit 310 includes an encoding and modulation unit 402, a digital beamforming unit 404, a plurality of transmission paths 406-1 to 406-N, and an analog beamforming unit 408.

The encoding and modulation unit 402 performs channel encoding. For the channel encoding, at least one of a low-density parity check (LDPC) code, a convolution code, and a polar code may be used. The encoding and modulation unit 402 generates modulation symbols by performing constellation mapping.

The digital beamforming unit 404 performs beamforming for digital signals (for example, modulation symbols). To this end, the digital beamforming unit 404 multiplies modulation symbols by beamforming weighted values. The beamforming weighted values may be used for changing the magnitude and phase of the signal, and may be referred to as a "precoding matrix" or a "precoder". The digital beamforming unit 404 outputs digitally beamformed modulation symbols through the plurality of transmission paths 406-1 to 406-N. At this time, according to a multiple-input multiple-output (MIMO) transmission scheme, the modulation symbols may be multiplexed, or the same modulation symbols may be provided through the plurality of transmission paths 406-1 to 406-N.

The plurality of transmission paths 406-1 to 406-N convert the digitally beamformed digital signals into analog signals. To this end, each of the plurality of transmission paths 406-1 to 406-N may include an inverse fast Fourier transform (IFFT) calculator, a cyclic prefix (CP) inserter, a DAC, and an up-converter. The CP inserter is for an orthogonal frequency division multiplexing (OFDM) scheme, and may be omitted when another physical layer scheme (for example, a filter bank multi-carrier (FBMC)) is applied. That is, the plurality of transmission paths 406-1 to 406-N provide independent signal-processing processes for a plurality of streams generated through the digital beamforming. However, depending on an implementation scheme, some of the elements of the plurality of transmission paths 406-1 to 406-N may be used in common.

The analog beamforming unit 408 performs beamforming on an analog signal. To this end, the digital beamforming unit 404 multiplies analog signals by beamforming weighted values. The beamformed weighted values are used to change the magnitude and phase of the signal. Specifically, the analog beamforming unit 408 may be variously configured according to a connection structure between the plurality of transmission paths 406-1 to 406-N and antennas. For example, each of the plurality of transmission paths 406-1 to 406-N may be connected to one antenna array. In another example, the plurality of transmission paths 406-1 to 406-N may be connected to one antenna array. In another example, the plurality of transmission paths 406-1 to 406-N may be adaptively connected to one antenna array or to two or more antenna arrays.

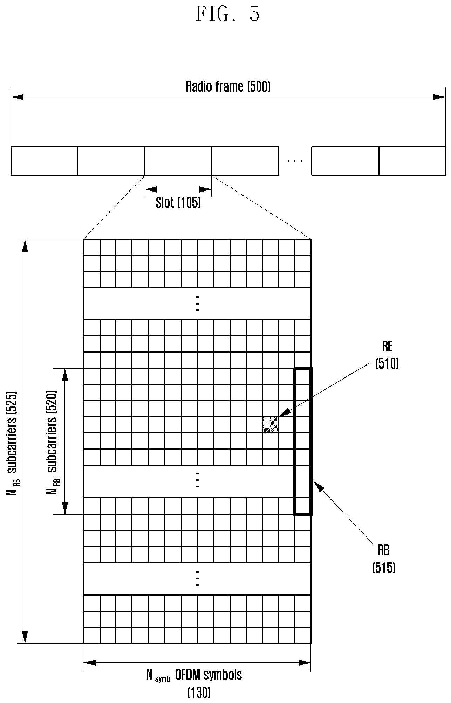

FIG. 5 illustrates the structure of radio time-frequency resources of the wireless communication system according to an embodiment of the disclosure.

Referring to FIG. 5, the horizontal axis indicates a time domain and the vertical axis indicates a frequency domain in radio resource areas. The minimum transmission unit in the time domain is an OFDM symbol or a DFT-S-OFDM symbol, and Nsymb OFDM symbols or DFT-S-OFDM symbols 530 are included in one slot 505. Unlike the slot, in the NR system, the length of a subframe may be defined as 1.0 ms, and the length of a radio frame 500 may be defined as 10 ms. In the frequency domain, the minimum transmission unit is a subcarrier, and a bandwidth of the entire system transmission band may include a total of NBW subcarriers 525. Detailed numbers of Nsymb and NBW may be variably applied depending on a system.

The basic unit of the time-frequency resource areas is a resource element (RE) 510, and may be indicated by an OFDM symbol index or a DFT-S-OFDM symbol index and a subcarrier index. A resource block (RB) 515 may be defined as NRB consecutive subcarriers 520 in the frequency domain. In general, the minimum transmission unit of data is an RB, and Nsymb = 14 and NRB = 12 in the NR system.

The structure of radio time-frequency resources in FIG. 5 is applied to a Uu interface. Further, the structure of radio time-frequency resources in FIG. 5 may be similarly applied to the sidelink.

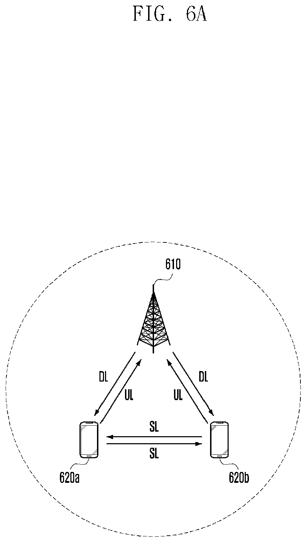

FIG. 6A illustrates an example of a scenario for sidelink communication according to an embodiment of the disclosure.

FIG. 6A illustrates an in-coverage scenario in which sidelink UEs 620a and 620b are located within the coverage of a BS 610. The sidelink UEs 620a and 620b may receive data and control information from the BS 610 through a downlink (DL) or transmit data and control information to the BS through an uplink (UL). At this time, the data and the control information may be data and control information for sidelink communication or data and control information for general cellular communication, not the sidelink communication. Further, in FIG. 6A, the sidelink UEs 620a and 620b may transmit and receive data and control information for sidelink communication through the sidelink (SL).

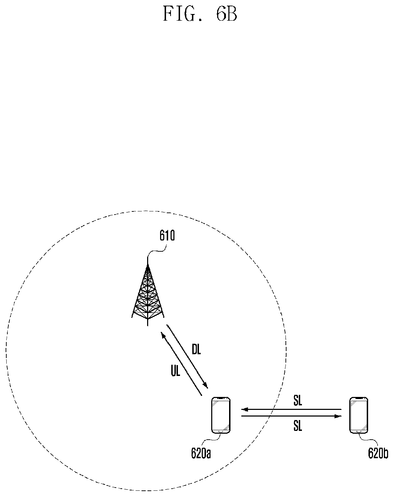

FIG. 6B illustrates an example of a scenario for sidelink communication according to an embodiment of the disclosure.

Referring to FIG. 6B, the case of partial coverage in which the first UE 620a of the sidelink UEs is located inside the coverage of the BS 610 and the second UE 620b is located outside the coverage of the BS 610 is illustrated. The first UE 620a located inside the coverage of the BS 610 may receive data and control information from the BS through the downlink or transmit data and control information to the BS through the uplink. The second UE 620b located outside the coverage of the BS 610 cannot receive data and control information from the BS through the downlink and cannot transmit data and control information to the BS through the uplink. The second UE 620b may transmit and receive data and control information for sidelink communication to and from the first UE 620a through the sidelink (SL).

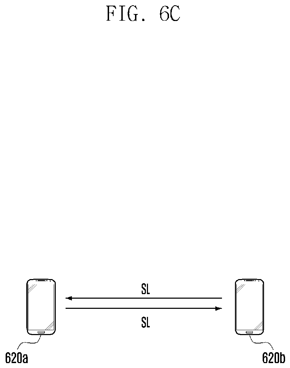

FIG. 6C illustrates an example of a scenario for sidelink communication according to an embodiment of the disclosure.

Referring to FIG. 6C, the case in which sidelink UEs (for example, the first UE 620a and the second UE 620b) are located outside the coverage of the BS is illustrated. Accordingly, the first UE 620a and the second UE 620b cannot receive data and control information from the BS through the downlink and cannot transmit data and control information to the BS through the uplink. The first UE 620a and the second UE 620b may transmit and receive data and control information for sidelink communication through the sidelink (SL).

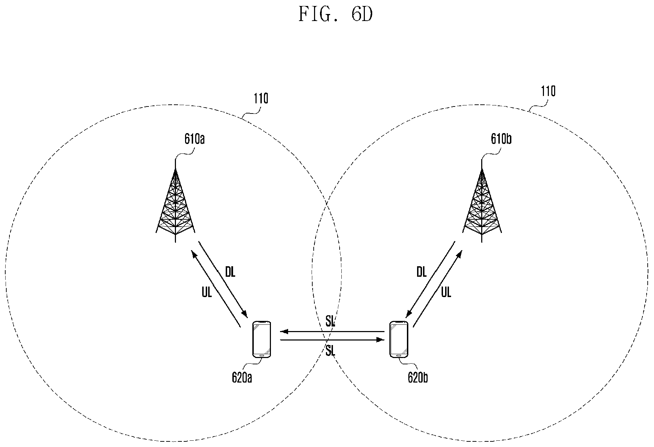

FIG. 6D illustrates an example of a scenario for sidelink communication according to an embodiment of the disclosure.

Referring to FIG. 6D, the first UE 620a and the second UE 620b performing sidelink communication may perform inter-cell sidelink communication in the state in which the first UE 620a and the second UE 620b access different BSs (for example, a first BS 610a and a second BS 610b) (for example, an RRC-connected state) or a camping state (for example, an RRC connection-released state, that is, an RRC-idle state). At this time, the first UE 620a may be a sidelink transmission UE, and the second UE 620b may be a sidelink reception UE. Alternatively, the first UE 620a may be a sidelink reception UE, and the second UE 620b may be a sidelink transmission UE. The first UE 620a may receive a sidelink-dedicated system information block (SIB) from the BS 610a which the first UE 620a accesses (or on which the first UE 620a camps), and the second UE 620b may receive a sidelink-dedicated SIB from another BS 620b which the second UE accesses (or on which the second UE 620b camps). At this time, the sidelink-dedicated SIB information received by the first UE 620a and the sidelink-dedicated SIB information received by the second UE 620b may be different from each other. Accordingly, it may be required to unify the information to perform sidelink communication between UEs located in different cells.

In the examples of FIGs. 6A to 6D, the sidelink system including the two UEs (for example, the first UE 610a and the second UE 620b) has been described as an example, but the disclosure is not limited thereto and may be applied to a sidelink system in which two or more UEs participate. Further, the uplink and the downlink between the BSs 610, 610a, and 610b and the sidelink UEs 620a and 620b may be referred to as a Uu interface, and the sidelink between sidelink UEs may be referred to as a PC-5 interface. In the following description, the uplink or the downlink and the Uu interface, the sidelink, and the PC-5 may be interchangeably used.

Meanwhile, in the disclosure, the UE may be a vehicle supporting vehicle-to-vehicle (V2V) communication, a vehicle or a handset (for example, a smartphone) of a pedestrian supporting vehicle-to-pedestrian (V2P) communication, a vehicle supporting vehicle-to-network (V2N) communication, or a vehicle supporting vehicle-to-infrastructure (V2I) communication. In the disclosure, the UE may be a road side unit (RSU) having a UE function, an RSU having a BS function, or an RSU having some of the BS function and some of the UE function.

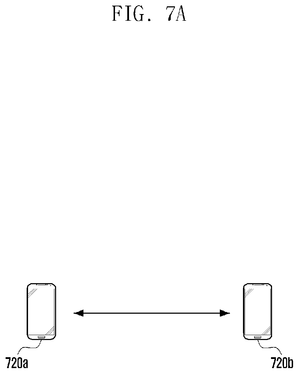

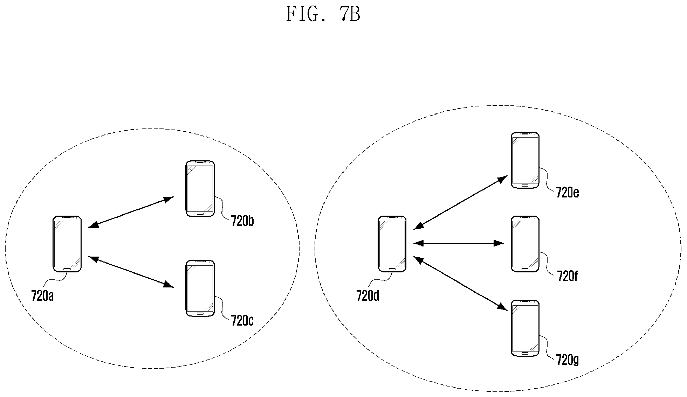

FIGs. 7A and 7B illustrate transmission schemes of sidelink communication according to an embodiment of the disclosure.

Specifically, FIG. 7A illustrates a unicast scheme and FIG. 7B illustrates a groupcast scheme.

Referring to FIG. 7A, a transmission UE 720a and a reception UE 720b may perform one-to-one communication. The transmission scheme illustrated in FIG. 7A may be referred to as unicast communication. Referring to FIG. 7B, a transmission UE 720a or 720d and reception UEs 720b, 720c, 720e, 720f, and 720g may perform one-to-one communication. The transmission scheme illustrated in FIG. 7B may be referred to as groupcast or multicast. In FIG. 7B, the first UE 720a, the second UE 720b, and the third UE 720c configure one group, and perform groupcast communication, and the fourth UE 720d, the fifth UE 720e, the sixth UE 720f, and the seventh UE 720g configure another group, and perform groupcast communication. UEs may perform groupcast communication within the group to which the UEs belong and may perform unicast, groupcast, or broadcast communication with at least one other UE belonging to other groups. Although FIG. 7B illustrates two groups for convenience of description, the disclosure is not limited thereto and may be applied to the case in which the larger number of groups are configured.

Meanwhile, although not illustrated in FIG. 7A or 7B, sidelink UEs may perform broadcast communication. Broadcast communication is a scheme in which all sidelink UEs receive data and control information transmitted by a sidelink transmission UE through a sidelink. For example, in FIG. 7B, when the first UE 720a is a transmission UE, the remaining UEs 720b, 720c, 720d, 720e, 720f, and 720g may receive data and control information transmitted by the first UE 720a.

The sidelink unicast communication, groupcast communication, and broadcast communication may be supported in an in-coverage scenario, a partial-coverage scenario, or an out-of-coverage scenario.

Unlike an LTE sidelink, an NR sidelink may consider supporting a transmission type in which a vehicle UE transmits data only to one specific UE through unicast and a transmission type in which a vehicle UE transmits data to a plurality of specific UEs through groupcast. For example, when a service scenario such as platooning, which is a technology in which two or more vehicles are connected through one network and move in a cluster form, is considered, the unicast and groupcast technologies may be useful. Specifically, unicast communication may be used to control one specific UE by a leader UE in a group connected through platooning, and groupcast communication may be used to control a group including a plurality of specific UEs.

In the V2X system, resource allocation may use the following methods.

### (1) Model resource allocation

Scheduled resource allocation is a method by which the BS allocates resources used for sidelink transmission to RRC-connected UEs through a dedicated scheduling scheme. Since the BS can manage resources of the sidelink, scheduled resource allocation method may be advantageous in managing interference and a resource pool (for example, dynamic allocation and/or semi-persistent transmission). When the RRC-connected mode UE has data to be transmitted to another UE(s), the UE may transmit information indicating that the UE has data to be transmitted to another UE(s) to the BS through an RRC message or a MAC control element (CE). For example, the RRC message which the UE transmits to the BS may be a sidelink UE information (SidelinkUEInformation) or UE assistance information (UEAssistancelnformation) message, and the MAC CE may correspond to a BSR, a MAC CE, or a scheduling request (SR) including at least one of an indicator indicating a buffer status report (BSR) for V2X communication and at least one piece of information on the size of buffered data for sidelink communication.

### (2) Mode2 resource allocation

Second, UE autonomous resource selection is a method by which a sidelink transmission/reception pool for V2X is provided to the UE through system information or an RRC message (for example, an RRC reconfiguration (RRCReconfiguration) message or a PC5-RRC message) and the UE selects a resource pool and resources according to a predetermined rule. The UE autonomous resource selection may correspond to one or a plurality of resource allocation methods below.
> The UE autonomously selects sidelink resources for transmission.
> The UE assists sidelink resource selection for other UEs.
> The UE is configured with NR configured grant for sidelink transmission.
> The UE schedules sidelink transmission of other UEs.

- UE autonomous selection methods may include zone mapping, sensing-based resource selection, random selection, and the like.
- In addition, even though the UE exists in the coverage of the BS, resource allocation or resource selection may not be performed through scheduled resource allocation or UE autonomous resource selection mode, in which case the UE may perform V2X sidelink communication through a preconfigured sidelink transmission/reception resource pool (preconfiguration resource pool).
- When UEs for V2X communication exist outside the coverage of the BS, the UEs may perform V2X sidelink communication through a preconfigured sidelink transmission/reception resource pool.

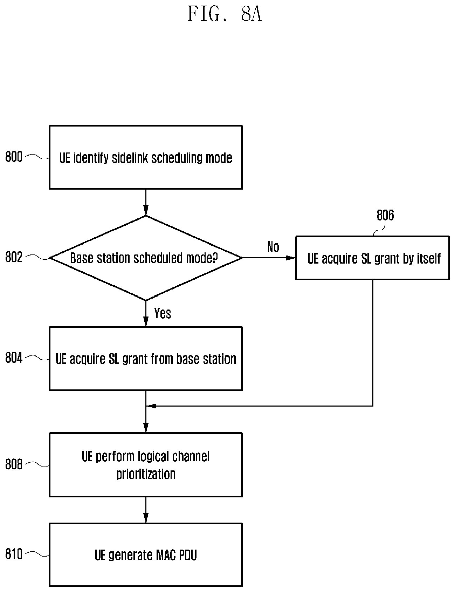

FIG. 8A illustrates an operation in which the UE processes sidelink transmission according to an embodiment of the disclosure.

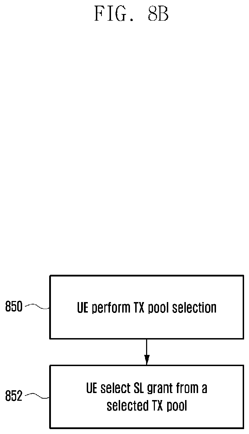

Referring to FIG. 8A, the UE may determine a sidelink transmission resource allocation mode in operation 800. The sidelink transmission resource allocation mode may be configured by the BS when the UE is in the RRC_CONNECTED state, and may be configured based on whether the RRC state of the UE is one of RRC_IDLE, RRC_INACTIVE, or OUT OF COVERAGE. The UE may determine whether the sidelink transmission resource allocation is model resource allocation, that is, a mode in which the BS allocates transmission resources or mode2 resource allocation, that is, a mode in which the UE allocates transmission resources by itself in operation 802. When model resource allocation is determined according to the determination of operation 802, the UE may proceed to operation 804 and acquire transmission resources from the BS. When mode2 resource allocation is determined according to determination of operation 802, the UE may proceed to operation 806 and acquire transmission resources by itself. The operation of acquiring transmission resources by the UE in operation 806 is described with reference to FIG. 8B.

The UE may perform a logical channel priority operation which is an operation of determining a destination to use transmission resources acquired in operation 804 or 806 and one or more logical channels corresponding to the destination in operation 808. The UE may configure a MAC protocol data unit (PDU) based on the selected destination and packets of the logical channels corresponding to the selected destination and configure a transport block in operation 810.

When a hybrid automatic repeat request (HARQ) feedback configuration of the selected destination and the logical channels corresponding to the selected destination is HARQ feedback enabled, the UE may multiplex packets of one or more logical channels set to HARQ feedback enabled to one MAC PDU. The UE may transfer the configured MAC PDU and HARQ feedback enabled indication information to its own physical layer.

When the HARQ feedback configuration of the selected destination and the logical channels corresponding to the selected destination is HARQ feedback disabled, the UE may multiplex packets of one or more logical channels set to HARQ feedback disabled to one MAC PDU. The UE may deliver the configured MAC PDU and HARQ feedback disabled indication information to its own physical layer.

FIG. 8B illustrates an operation in which the UE selects sidelink transmission resources according to an embodiment of the disclosure.

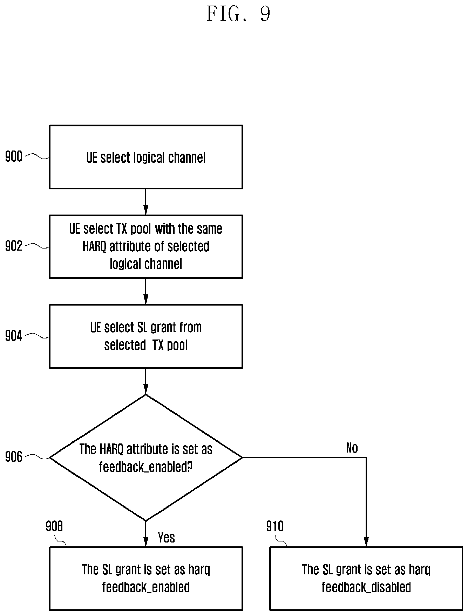

Referring to FIG. 8B, the UE may select a transmission resource pool to be used for packet transmission in operation 850. A detailed operation of the UE selecting the transmission resource pool in operation 850 is described with reference to FIGs. 9 to 10. The UE may perform an operation of acquiring transmission resources from the transmission resource pool selected in operation 850 in operation 852. The UE may perform at least one of sensing-based resource selection or random resource selection in order to acquire transmission resources in operation 852.

FIG. 9 illustrates an operation in which the UE selects a sidelink transmission resource pool according to an embodiment of the disclosure.

The UE may select a transmission resource pool in which the HARQ feedback resources are configured when the logical channels selected based on the determination for selecting the transmission resource pool is set to HARQ feedback enabled, and select one of the transmission resource pool in which HARQ feedback resources are configured or a transmission resource pool in which no HARQ feedback resources are configured when the selected logical channels are set to HARQ feedback disabled. Hereinafter, various embodiments in which the UE selects a transmission resource pool that satisfies HARQ feedback enabled or HARQ feedback disabled configured in logical channels are described with reference to FIG. 9.

Referring to FIG. 9, the UE may select logical channels satisfying at least one or a combination of the following conditions in operation 900.
(1) Logical channel having data to be transmitted
(2) Logical channel having highest transmission priority
(3) Logical channel having SBj parameter (token of sidelink transmission buffer) larger than 0

The UE may determine whether there is a transmission source pool which is the same as the HARQ feedback configuration in the selected logical channels and select the transmission resource pool which is the same as the HARQ feedback configuration in operation 902. When the HARQ feedback configuration in the selected logical channels is HARQ feedback enabled, the UE may select a transmission resource pool in which the HARQ feedback resources are configured. When the HARQ feedback configuration in the selected logical channels is HARQ feedback disabled, the UE may select a transmission resource pool in which HARQ feedback resources are not configured. In another embodiment, when the HARQ feedback configuration in the selected logical channels is HARQ feedback disabled and the UE determines that there is no transmission resource pool in which the HARQ feedback resources are not configured, the UE may select the transmission resource pool in which the HARQ feedback resources are configured. In another embodiment, when the HARQ feedback configuration in the selected logical channels is HARQ feedback disabled, the UE may select one of the transmission resource pool in which the HARQ feedback resources are configured or the transmission resource pool in which the HARQ feedback resources are not configured as the transmission resource pool.

When the number of logical channels satisfying the determination condition of operation 900 is one or more and HARQ feedback configurations are different for the logical channels (that is, some are configured as HARQ feedback enabled and some are configured as HARQ feedback disabled), the UE may select the transmission resource pool in which HARQ feedback resources are configured.

When it is determined that one or more transmission resource pools satisfy the condition of operation 902, the UE may randomly select one transmission resource pool in an embodiment. In an embodiment, the UE may select a transmission resource pool having the lowest channel busy ratio (CBR). In an embodiment, the UE may select a transmission resource pool having a CBR lower than a configured threshold value. In an embodiment, the UE may randomly select a transmission resource pool having a CBR lower than a configured threshold value. In an embodiment, the UE may select a transmission resource pool having a CBR lower than a configured threshold value and having the lowest CBR.

In operation 904, the UE may perform an operation of selecting transmission resources in the transmission resource pool selected in operation 902 based on sensing-based selection or random selection.

In operation 906, the UE may perform an operation of determining whether the SL grant acquired in operation 904 is HARQ feedback enabled or HARQ feedback disabled.

In an embodiment, when the UE determines that the transmission resource pool selected in operation 902 is selected by the logical channels configured as HARQ feedback enabled and the transmission resources of operation 904 are acquired from the resource pool, the UE may determine that the corresponding SL grant is HARQ feedback enabled in operation 908. When the UE determines that the transmission resource pool selected in operation 902 is selected by the logical channels configured as HARQ feedback disabled and the transmission resources of operation 904 are acquired from the resource pool, the UE may determine that the corresponding SL grant is HARQ feedback disabled in operation 910.

In another embodiment, when the UE determines that HARQ feedback resources are configured in the transmission resource pool selected in operation 902 and the transmission resources of operation 904 are acquired from the resource pool in operation 906, the UE may determine that the corresponding SL grant is HARQ feedback enabled in operation 908. When the UE determines that HARQ feedback resources are not configured in the transmission resource pool selected in operation 902 and the transmission resources of operation 904 are acquired from the resource pool in operation 906, the UE may determine that the corresponding SL grant is HARQ feedback disabled in operation 910.

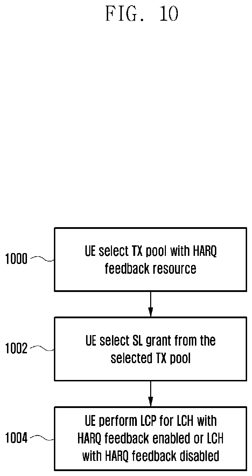

FIG. 10 illustrates an operation in which the UE selects a sidelink transmission resource pool according to an embodiment of the disclosure.

Referring to FIG. 10, the UE may select a transmission resource pool in which HARQ feedback resources are configured in operation 1000. The UE may acquire an SL grant from the selected transmission resource pool in operation 1002. The SL grant may be used for one of a logical channel in which the HARQ feedback configuration is HARQ feedback enabled and a logical channel in which the HARQ feedback configuration is HARQ feedback disabled.

When the UE determines that there is no transmission resource pool in which HARQ feedback resources are configured in operation 1000, the UE may select a transmission resource pool in which HARQ feedback resources are not configured and acquire the SL grant. The acquired SL grant may be used for the logical channel in which the HARQ feedback configuration is HARQ feedback disabled. The acquired SL grant may be used for one of the logical channel in which the HARQ feedback configuration is HARQ feedback enabled and the logical channel in which the HARQ feedback configuration is HARQ feedback disabled. In this case, the UE may randomly perform processing as if the HARQ feedback enabled logical channel is HARQ feedback disabled.

The UE may perform a logical channel prioritization (LCP) procedure of selecting a logical channel to use the acquired SL grant in operation 1004. When the UE performs the operation of selecting the logical channel to use the selected SL grant and the logical channel having the highest transmission priority is configured as HARQ feedback enabled, the UE may select one or more logical channels configured as HARQ feedback enabled and use the SL grant. Alternatively, when it is determined that the logical channel having the highest transmission priority is configured as HARQ feedback disabled, the UE may select one or more logical channels configured as HARQ feedback disabled and use the SL grant.

When the UE performs the operation of selecting the transmission resource pool according to the embodiments of FIGs. 9 to 10, the UE may process the case in which HARQ feedback resources are not configured in the transmission resource pool in which case the UE operation may include at least one of the following operations.
(1) The UE may select transmission resources in the transmission resource pool in which HARQ feedback resources are not configured and determine that the selected transmission resources are HARQ feedback disabled. The transmission resources corresponding to HARQ feedback disabled may be used for transmission of packets belonging to logical channels in which the HARQ feedback configuration is configured as HARQ feedback disabled. When the HARQ feedback configuration of the selected logical channels is configured as HARQ feedback enabled, the UE may skip transmission of packets belonging to logical channels in which the HARQ feedback configuration is configured as HARQ feedback enabled.
(2) The UE may select transmission resources in the transmission resource pool in which HARQ feedback resources are not configured and determine that the selected transmission resources are HARQ feedback disabled. When the HARQ feedback configuration of the selected logical channel is configured as HARQ feedback enabled, the UE may ignore the HARQ feedback configuration of the logical channel and randomly process the same as if the HARQ feedback configuration of the corresponding logical channel is HARQ feedback disabled. The transmission resources corresponding to HARQ feedback disabled may be used for transmission of packets belonging to the logical channel in which the HARQ feedback configuration is configured as HARQ feedback disabled and the logical channel which is randomly processed by the UE like the logical channel configured as HARQ feedback disabled.

According to an embodiment of the disclosure, an operation of reselecting a transmission resource pool is described below.

The UE may determine an HARQ feedback configuration of a logical channel selected for transmission. The UE may determine whether the HARQ feedback configuration of the selected logical channel is HARQ feedback enabled or HARQ feedback disabled. When it is determined that HARQ feedback resources are not configured in the preselected transmission resource pool and are used for transmission of packets of the logical channel configured as HARQ feedback disabled, and the HARQ feedback configuration of the logical channel selected for transmission is HARQ feedback disabled, the UE may determine to continuously use the existing selected transmission resource pool. When it is determined that HARQ feedback resources are not configured in the preselected transmission resource pool and are used for transmission of packets of the logical channel configured as HARQ feedback disabled, and the HARQ feedback configuration of the logical channel selected for transmission is HARQ feedback enabled, the UE may determine to perform an operation of selecting a new transmission resource pool, that is, the transmission resource pool in which the HARQ feedback resources are configured.

When it is determined that HARQ feedback resources are configured in the preselected transmission resource pool and the HARQ feedback configuration of the logical channel selected for transmission is HARQ feedback disabled, the UE may determine to continuously use the existing selected transmission resource pool.

When it is determined that HARQ feedback resources are configured in the preselected transmission resource pool and the HARQ feedback configuration of the logical channel selected for transmission is HARQ feedback disabled, the UE may determine to perform the operation of selecting a new transmission resource pool, that is the transmission resource pool in which HARQ feedback resources are not configured.

When it is determined that HARQ feedback resources are not configured in the preselected transmission resource pool and the HARQ feedback configuration of the logical channel selected for transmission is HARQ feedback enabled, the UE may determine to continuously use the existing selected transmission resource pool.

In an embodiment of the disclosure, the UE may perform a procedure of reselecting a transmission resource pool when at least one or a combination of the following cases is satisfied even though it is determined to continuously use the existing selected transmission resource pool based on the HARQ feedback configuration of the logical channel.
(1) The case in which it is determined that a CBR of the transmission resource pool is higher than a CBR threshold value configured in the corresponding UE (or logical channel)
(2) The case in which it is determined the transmission pool escapes a channel occupancy ratio (CR) limit value configured in the corresponding UE (or logical channel) (that is, there is a limit on a CR value for using the transmission resource pool for the UE (or logical channel))
(3) The case in which it is determined that the transmission resource pool escapes a CR limit threshold value configured in the corresponding UE (or logical channel) (that is, there is a limit on a CR value for using the transmission resource pool for the UE (or logical channel))

According to various embodiments of the disclosure, an operation performed by the UE selecting logical channels to transmit packets using the SL grant acquired from the selected transmission resource pool is described below.

### (1) Embodiment 1

When the UE determines that the SL grant is acquired from the transmission resource pool in which HARQ feedback resources are configured, the UE may select the logical channel having the highest transmission priority that satisfies the following conditions or a destination identifier corresponding to a MAC CE.
- Logical channel having data to be transmitted (pending data)
- Logical channel having SBj parameter larger than 0
- Logical channel configured as HARQ feedback enabled
- Logical channel configured as HARQ feedback disabled when there is no logical channel configured as HARQ feedback enabled

The UE may select logical channel satisfying the following conditions from among logical channels belonging to the selected destination identifier.
- Logical channel having pending data
- Logical channel configured as HARQ feedback enabled
- Logical channel configured as HARQ feedback disabled when there is no logical channel configured as HARQ feedback enabled

Alternatively, when the UE determines that the SL grant is acquired from the transmission resource pool in which HARQ feedback resources are not configured, the UE may select the logical channel having the highest transmission priority that satisfies the following conditions or a destination identifier corresponding to a MAC CE.
- Logical channel having pending data
- Logical channel having SBj parameter larger than 0
- Logical channel configured as HARQ feedback disabled

The UE may select logical channel satisfying the following conditions from among logical channels belonging to the selected destination identifier.
- Logical channel having pending data
- Logical channel configured as HARQ feedback disabled

### (2) Embodiment 2

When the UE determines that the SL grant is HARQ feedback enabled, the UE may select the logical channel having the highest transmission priority that satisfies the following conditions or a destination identifier corresponding to a MAC CE.
- Logical channel having data to be transmitted (pending data)
- Logical channel having SBj parameter larger than 0
- Logical channel configured as HARQ feedback enabled
- Logical channel configured as HARQ feedback disabled when there is no logical channel configured as HARQ feedback enabled

The UE may select logical channel satisfying the following conditions from among logical channels belonging to the selected destination identifier.
- Logical channel having pending data
- Logical channel configured as HARQ feedback enabled
- Logical channel configured as HARQ feedback disabled when there is no logical channel configured as HARQ feedback enabled

When the UE determines that the SL grant is HARQ feedback disabled, the UE may select the logical channel having the highest transmission priority that satisfies the following conditions or a destination identifier corresponding to a MAC CE.
- Logical channel having pending data
- Logical channel having SBj parameter larger than 0
- Logical channel configured as HARQ feedback disabled

The UE may select logical channel satisfying the following conditions from among logical channels belonging to the selected destination identifier.
- Logical channel having pending data
- Logical channel configured as HARQ feedback disabled

### (3) Embodiment 3

The UE may select a transmission resource pool that satisfies a condition of the logical channel having the highest transmission priority and an HARQ feedback configuration condition and acquire the SL grant from the resource pool.

The UE may select the logical channel having the highest transmission priority satisfying the following conditions or a destination identifier corresponding to a MAC CE.
- Logical channel having data to be transmitted (pending data)
- Logical channel having SBj parameter larger than 0

The UE may select logical channel satisfying the following conditions from among logical channels belonging to the selected destination identifier.
- Logical channel having pending data
- Logical channel configured as HARQ feedback enabled when the logical channel having the highest priority is configured as HARQ feedback enabled
- Logical channel configured as HARQ feedback disabled when the logical channel having the highest priority is configured as HARQ feedback disabled

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, various modifications and changes may be made thereto without departing from the scope of the disclosure. Therefore, the scope of the disclosure should not be defined as being limited to the embodiments, but should be defined by the appended claims and equivalents thereof.

## Claims

1. A method performed by a first terminal in a wireless communication system, the method comprising:
identifying whether sidelink data to be transmitted is available in a logical channel;
in case that the sidelink data is available in the logical channel, identifying whether hybrid automatic repeat request (HARQ) feedback for the logical channel is enabled;
selecting a resource pool, based on a result of the identification;
selecting a resource from the selected resource pool; and
performing sidelink data transmission to a second terminal using the selected resource.

2. The method of claim 1, wherein the selecting a resource pool comprises:
in case that the HARQ feedback for the logical channel is configured as enabled, selecting a resource pool including configuration information for sidelink feedback from preconfigred resource pools; and
in case that the HARQ feedback for the logical channel is configured as disabled, selecting any resource pool from the preconfigured resource pools.

3. The method of claim 1, wherein the performing sidelink data transmission to a second terminal further comprises selecting the second terminal having a logical channel of a highest priority from among logical channels in which the sidelink data is available and having token values (SBj) of buffers larger than 0.

4. The method of claim 3, further comprising selecting a logical channel for performing the sidelink data transmission among logical channels belonging to the second terminal,
wherein the logical channel for performing the sidelink data transmission satisfies a first condition of the sidelink data to be transmitted being available, a second condition of sidelink HARQ feedback set to enabled or disabled, in case that the resource is selected from a resource pool including configuration information for sidelink feedback, is configured as, and a third condition of the sidelink HARQ feedback set to disabled, in case that the resource is selected from a resource pool which does not include the configuration information for the sidelink feedback.

5. The method of claim 1,
wherein the first terminal is configured as a sidelink resource allocation mode 2, and
wherein selecting the resource from the selected resource pool is based on a random selection or sensing.

6. The method of claim 1, further comprising:
receiving, from a base station, first configuration information for the logical channel and second configuration information for the resource pool.

7. The method of claim 6, wherein the first configuration information and the second configuration information are received through a radio resource control (RRC) message or system information.

8. A first terminal apparatus in a wireless communication system, the first terminal comprising:
a transceiver; and
a controller configured to:
identify whether sidelink data to be transmitted is available in a logical channel;
in case that the sidelink data is available in the logical channel, identify whether hybrid automatic repeat request (HARQ) feedback for the logical channel is enabled;
select a resource pool, based on a result of the identification;
select a resource from the selected resource pool; and
control the transceiver to perform sidelink data transmission to a second terminal using the selected resource.

9. The first terminal of claim 8,
wherein the controller is further configured to select a resource pool including configuration information for sidelink feedback from preconfigred resource pools in case that the HARQ feedback for the logical channel is configured as enabled; and
select any resource pool from the preconfigured resource pools in case that the HARQ feedback for the logical channel is configured as disabled.

10. The first terminal of claim 8,
wherein the controller is further configured to select the second terminal having a logical channel of a highest priority from among logical channels in which the sidelink data is available and having token values (SBj) of buffers larger than 0.

11. The first terminal of claim 10,
wherein the controller is further configured to select a logical channel for performing the sidelink transmission which satisfies a first condition of the sidelink data to be transmitted being available, a second condition of sidelink HARQ feedback set to enabled or disabled, in case that the resource is selected from a resource pool including configuration information for sidelink feedback, is configured as, and a third condition of the sidelink HARQ feedback set to disabled, in case that the resource is selected from a resource pool which does not include the configuration information for the sidelink feedback.

12. The first terminal of claim 8,
wherein the first terminal is configured as a sidelink resource allocation mode 2, and
wherein the controller is further configured to select the resource from the selected resource pool, based on random selection or sensing.

13. The first terminal of claim 8,
wherein the controller is further configured to control the transceiver to receive, from a base station, first configuration information for the logical channel and second configuration information for the resource pool.

14. The first terminal of claim 13,
wherein the first configuration information and the second configuration information are received through a radio resource control (RRC) message or system information.
